# EUROPÄISCHE PATENTSCHRIFT

(11) **EP 0 772 785 B1**
(45) Veröffentlichungstag und Bekanntmachung des Hinweises auf die Patenterteilung: **19.01.2000**
(21) Anmeldenummer: 95921706.8
(22) Anmeldetag: 13.06.1995
(51) Int. Cl.: G01R 31/36, H02J 7/00

(54) **VORRICHTUNG ZUM LADUNGSAUSTAUSCH ZWISCHEN EINER VIELZAHL VON IN REIHE GESCHALTETEN ENERGIESPEICHERN ODER -WANDLERN**
CHARGE EXCHANGING DEVICE AMONG A PLURALITY OF ENERGY ACCUMULATORS OR CONVERTERS INTERCONNECTED IN SERIES
DISPOSITIF PERMETTANT A UNE PLURALITE D'ACCUMULATEURS OU DE CONVERTISSEURS D'ENERGIE MONTES EN SERIE D'ECHANGER LEUR CHARGE

(30) Priorität: 30.07.1994 DE 4427077
(43) Veröffentlichungstag der Anmeldung: 14.05.1997
(73) Patentinhaber: FRAUNHOFER-GESELLSCHAFT ZUR FÖRDERUNG DER ANGEWANDTEN FORSCHUNG E.V., 80636 München (DE)
(72) Erfinder: SCHMIDT, Heribert, D-79312 Emmendingen (DE)
(74) Vertreter: RACKETTE Partnerschaft Patentanwälte
(86) Internationale Anmeldenummer: DE9500791
(87) Internationale Veröffentlichungsnummer: WO9604564

(56) Entgegenhaltungen:
- EP-A- 0 432 640
- US-A- 3 202 900
- US-A- 4 967 136

## Beschreibung

Die Erfindung betrifft Vorrichtungen zum Ladungsaustausch zwischen zwei gleichartigen Energiespeichern oder Energiewandlern einer Vielzahl von in Reihe geschalteten und einen Gesamtenergiespeicher oder Gesamtenergiewandler bildenden Energiespeichern beziehungsweise Energiewandlern, bei der elektrische Speicher, die jeweils aus einem von Energiespeichern beziehungsweise Energiewandlern geladenen kapazitiven Element bestehen, mittels über einen Taktgeber ansteuerbarer Schalter jeweils einem der gleichartigen Energiespeicher beziehungsweise Energiewandler in mindestens einem Taktschritt parallelgeschaltet sind.

Aus der DE 39 40 929 C1 der Anmelderin ist eine solche Vorrichtung bekannt. Bei dieser werden mit Hilfe eines Leistungsmultiplexers jeweils zwei Energiespeicher aus der Vielzahl der Energiespeicher mit einem Kondensator zusammengeschaltet, wodurch ein Ladungsausgleich zwischen den beiden ausgewählten Energiespeichern stattfinden kann. Dabei ist von Nachteil, daß immer nur zwei Energiespeicher bearbeitet werden können, wobei jeder angeschaltete Akkumulator weniger als 50 Prozent der Gesamtzeit mit dem Ausgleichskondensator verbunden ist. Bei einer zufälligen Auswahl des Energiespeichers ist damit jeder Energiespeicher bei N Energiespeichern nur zu 1/(2·N)tel der Zeit zum Ladungsausgleich mit dem Kondensator verschaltet. Um dieses System zu verbessern, ist eine aufwendige Schaltungslogik vonnöten. Die Schalter bei der bekannten Vorrichtung müssen für die gesamte Systemspannung ausgelegt sein.

Ein ähnliches Überwachungsverfahren ist aus der US-A-4 331 911 bekannt und dient zum Angleichen von Spannungen einzelner, in Reihe geschalteter Akkumulatoren mit einem DC-DC-Wandler. Bei den elektrischen Speichern handelt es sich um transformatorische Elemente. Der einzige zentrale Wandler für alle Akkumulatoren wird aus der Gesamtbatterie gespeist, und er ist nicht fähig, durch Alterung auftretende Besonderheiten einzelner Akkumulatoren zu detektieren.

In der DE-OS 20 21 531 ist eine Vorrichtung zur Verlängerung der Entladungsdauer von wiederaufladbaren Akkumulatoren beschrieben, bei der durch Einschleifen einer Spule in einen Gleichstrom-Stromkreis auftretende Induktionsströme über einen Kondensator wieder der Stromquelle zugeführt werden. Es wird eine Verlängerung der Entladungsdauer der Akkumulatoren dadurch bewirkt, daß die Last mit einem kleiner als Eins ausgelegten Tastverhältnis an die Akkumulatoren angeschaltet ist. Eine Verlängerung der Standzeit von Akkumulatoren im Hinblick auf ihre Auswechslung läßt sich damit nicht erreichen. Insbesondere können in ihrer Qualität schlechter werdende Akkumulatoren nicht erkannt werden.

Bis ein solcher, in seiner Speicherungs- und Ladungsqualität absinkender Akkumulator von der Überwachungseinrichtung für Akkumulatoren erkannt wird, führt sein Fehlverhalten zu einer Kette von Reaktionen in der Gruppe der Akkumulatoren, was zu einer Degradation auch der anderen Akkumulatoren führt.

In der DE-PS 30 31 931 ist eine Vorrichtung zur Verlängerung der Entladungsdauer von wiederaufladbaren Akkumulatoren beschrieben, bei der mit einer Überwachungseinrichtung die Spannungszustände der Akkumulatoren erfaßt werden. Es wird eine längere betriebssichere Entladung der Akkumulatoren dadurch bewirkt, daß der Akkumulatorbetrieb nicht bei Entladung und damit bei Erreichen einer Grenzspannung der schwächsten Zelle beendet wird, sondern erst, wenn diese Grenzspannung im Mittel aller zusammengeschalteten Akkumulatoren erreicht wird. Eine Verlängerung der Standzeit von Akkumulatoren im Hinblick auf ihre Auswechslung läßt sich damit nicht erreichen.

Aus der SU 1 065 959 ist eine Vorrichtung für ein Akkumulatorladegerät bekannt, mit der das Überladen und das Laden mit Falschpolung von Akkumulatoren verhindert wird. Dabei wird der Ladestrom über eine Transistorschaltung überwacht, die weiterhin Zenerdioden umfaßt Diese Schutzschaltung kann jedoch weder die Überwachung der Qualität der Akkumulatoren gewährleisten, noch eine längere Standzeit von in ihrer Qualität schlechter werdenden Akkumulatoren bewirken.

Aus der EP-A-0 432 639 der Anmelderin ist eine Überwachungseinrichtung für eine Vielzahl von in Reihe geschalteten, gleichartigen Akkumulatoren bekannt, bei der mit Hilfe einer Steuerschaltung ein elektrischer Speicher parallel zu einem der Akkumulatoren zugeschaltet wird, wobei die Primärwicklung eines Transformators in Reihe mit einem an die Steuerschaltung angeschlossenen Unterbrecher parallel zu den Polen der Gruppe von Akkumulatoren verbunden ist Dabei wird der elektrische Speicher jeweils aus der Sekundärwicklung gebildet, die über jeweils eine sperrende Diode mit jedem Akkumulator verbunden ist. Über eine Vergleichsschaltung wird bei Auftreten eines Differenzsignals in der Spannung zwischen den Akkumulatoren in der Steuerschaltung ein Funktionsgenerator angeschaltet, dessen Ausgang mit dem Unterbrecher verbunden ist. Damit kann gezielt dem schwächsten Akkumulator Energie zugeführt werden. Diese Anlage weist für kleine Anwendungen den Nachteil einer Vielzahl von steuernden Elementen auf, die einen Kosten- und ggf. einen Raumund Gewichtsfaktor darstellen. Zugleich ist neben dem erheblichen Aufwand für die Selektion der jeweiligen schwachen oder starken Zelle der Leistungsbereich der jeweils eingesetzten Sperrwandler nach oben begrenzt.

Schließlich ist aus der US-A-4 967 136 im Zusammenhang mit einer Lade- und Entladeschaltung für zwei in Reihe geschaltete Batterien ein kapazitives Element bekannt, dem an jedem seiner Polabgriffe jeweils zwei in Reihe geschaltete Schalter zugeordnet sind, die von einem Taktgeber in einem vorgegebenen Takt abwechselnd geöffnet und geschlossen werden.

Ausgehend von diesem Stand der Technik liegt der Erfindung die Aufgabe zugrunde, eine Vorrichtung der eingangs genannten Art zu schaffen, bei der der Austausch eines in seiner Qualität schlechteren Akkumulators mit einem geringeren Schaltungsaufwand gegenüber dem Stand der Technik hinausgezögert werden kann.

Diese Aufgabe wird bei einer Vorrichtung der eingangs genannten Art eines ersten Typs erfindungsgemäß dadurch gelöst, daß parallel zu jedem Energiespeicher beziehungsweise Energiewandler zwei Serienschaltungen von jeweils zwei in Reihe geschalteten Schaltern vorgesehen sind, daß an den Verbindungspunkt der zwei Schalter, deren Serienschaltung parallel zu dem einen Energiespeicher beziehungsweise Energiewandler liegt, und an den entsprechenden Verbindungspunkt der zwei Schalter, deren Serienschaltung parallel zu dem anderen, benachbarten Energiespeicher beziehungsweise Energiewandler liegt, jeweils ein Polabgriff eines kapazitiven Elementes geschaltet ist und daß die zwei Schalter der jeweils zu einem Energiespeicher beziehungsweise Energiewandler parallelen Serienschaltung von dem Taktgeber wechselseitig geöffnet und geschlossen werden, so daß jedes kapazitive Element wechselweise einem von den zwei zugeordneten, unmittelbar benachbarten Energiespeichern beziehungsweise Energiewandlern parallelgeschaltet ist.

Diese Aufgabe wird bei einer Vorrichtung der eingangs genannten Art eines zweiten Typs erfindungsgemäß dadurch gelöst, daß parallel zu jedem Energiespeicher beziehungsweise Energiewandler eine einzige Serienschaltung aus zwei Schaltern vorgesehen ist, daß alle kapazitiven Elemente in Reihe geschaltet sind, wobei ein Polabgriff des jeweiligen kapazitiven Elementes mit dem Verbindungspunkt der zwei Schalter, deren Serienschaltung einem Energiespeicher beziehungsweise Energiewandler parallelgeschaltet ist, verbunden ist, und der andere Polabgriff mit dem entsprechenden Verbindungspunkt der zwei Schalter, deren Serienschaltung parallel zu dem unmittelbar benachbarten Energiespeicher beziehungsweise Energiewandler liegt, verbunden ist, und daß alle Schalter synchron angesteuert sind.

Dadurch kommt es zu einer virtuellen Parallelschaltung von Paaren der tatsächlich in Reihe geschalteten Speicher, Zellen oder Akkumulatoren, so daß beim Auftreten von Spannungsdifferenzen zwischen einzelnen Zellen automatisch und ohne jede weitere Auswahl der Zellen oder Regelung ein Ausgleichsstrom zwischen den Zellen fließt. Dies führt dazu, daß im Idealfall die Abweichungen der Zellenspannungen untereinander zu Null werden, wohingegen beim Stand der Technik nach der US-A-4 331 911 zur Vermeidung von im Kreise fließenden Strömen das Übersetzungsverhältnis des eingesetzten Transformators gerade so gewählt worden ist, daß die auf der Sekundärseite induzierten Spannungen immer etwas kleiner als die mittlere Batteriespannung sind. Damit kann durch die Sperrwirkung der Dioden immer nur ein deutlicher Spannungsunterschied zwischen einer fiktiven durchschnittlichen Zelle und der qualitativ schlechten Zelle zu einem Stromfluß in diese betreffende Zelle führen.

Bei der hier vorgeschlagenen Vorrichtung wird die Energie nicht der Gesamtbatterie oder der Gesamtanordnung entnommen, sondern es ist durch die Verkopplung von Paaren von Akkumulatoren und durch das synchrone Umschalten der direkte Stromfluß von jeder Zelle höherer Spannung in benachbarte mit geringerer Spannung möglich.

Weitere Ausgestaltungen der Erfindung sind in den Unteransprüchen gekennzeichnet.

Nachfolgend werden zwei Ausführungsbeispiele der Erfindung anhand der Zeichnung näher erläutert. Es zeigen:
- Fig. 1: ein Ausschnitt eines Schaltbildes einer Vorrichtung zum Ladungsausgleich für in diesem Ausschnitt dargestellte fünf Akkumulatoren gemäß einem ersten Ausführungsbeispiel,
- Fig. 2: ein Ausschnitt eines Schaltbildes einer weiteren Vorrichtung zum Ladungsausgleich für in diesem Ausschnitt dargestellte vier Akkumulatoren gemäß einem zweiten Ausführungsbeispiel, und
- Fig. 3: ein Blockschaltbild für eine Ablaufsteuerung für eine Vorrichtung zum Ladungsausgleich gemäß einem der Ausführungsbeispiele.

Es sind natürlich eine Vielzahl von Realisierungsmöglichkeiten von Schaltungen zur Durchführung des Verfahrens möglich, von denen in der Folge zwei dargestellt werden.

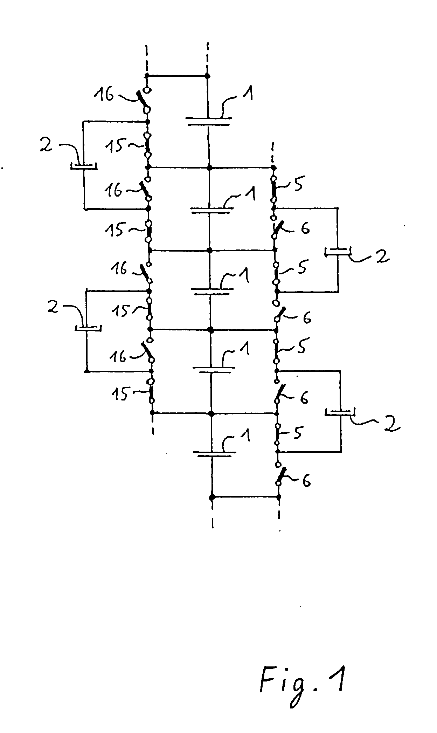

Die Fig. 1 zeigt einen Ausschnitt eines Schaltbildes einer Vorrichtung zum Ladungsausgleich für im Ausschnitt dargestellte fünf Akkumulatoren 1 gemäß einem ersten Ausführungsbeispiel. Diese können eine einzelne Gruppe von fünf Akkumulatoren 1 bilden oder, wie durch die strichlinierten Verbindungsleitungen angedeutet, Teile einer größeren, z.B. 10 bis 12 Akkumulatoren 1 umfassenden Batteriebank sein. Neben Akkumulatoren 1 als Energiespeicher kann die Vorrichtung auch für Energiewandler wie Brennstoffzellen eingesetzt werden oder für andere energiespeichernde Systeme, bei denen das Verhalten eines einzigen Energiespeichers oder Energiewandlers einen großen Einfluß auf das Gesamtsystem hat.

Es sind vier Kondensatoren 2 als elektrische Speicher vorgesehen, die jeweils zwei Akkumulatoren 1 zugeordnet sind. Neben Kondensatoren 2 können auch elektrochemische Speicher oder andere kapazitiv arbeitende Speicher elektrischer Energie Verwendung finden.

Die Kondensatoren 2 werden nun mit Hilfe von jeweils zwei Schalterpaaren 5 und 6, bzw. 15 und 16 mit einem Tastverhältnis von weniger als 50 Prozent abwechselnd mit den Polen des einen bzw. des anderen zugehörigen Akkumulators 1 verbunden. Die Schalter 5, 6, 15, 16 sind in demjenigen Taktschritt dargestellt, in dem die Schalter 5 und 15 geschlossen und die Schalter 6 und 16 offen sind, so daß jeweils jeder auf dem Zeichnungsblatt rechts dargestellte Kondensator 2 mit dem auf dem Zeichnungsblatt weiter oben liegenden Akkumulator 1 verbunden ist. Im nächsten, nicht dargestellten Taktschritt schließen dann die Schalter 6 und 16, während die Schalter 5 und 15 offen sind, so daß jeder Kondensator 2 dann mit dem anderen zugeordneten Akkumulator 1 parallelgeschaltet ist.

Die Schalter 5 und 6, bzw. 15 und 16, sind jeweils mit entsprechenden Ausgängen von zwei Taktgebern verbunden, die in der Zeichnung nicht dargestellt sind, und mit denen eine Taktfrequenz von einigen 100 Hz bis zu einigen 10 kHz erzeugbar ist. Es besteht nicht notwendigerweise eine Korrelation zwischen den Taktfrequenzen und Taktanfängen der beiden Taktgeber. Der in der Fig. 1 dargestellte Zustand, daß die Schalter 5 und 15 bzw. 6 und 16 synchron geschlossen bzw. offen sind, ist keine technische Notwendigkeit. Es ist weiterhin möglich, die auf einer Bildseite der Fig. 1 liegenden Kondensatoren 2 unterschiedlich zu takten, sofern nur die vier einem Kondensator 2 zugeordneten Schalter 5 und 6, bzw. die vier Schalter 15 und 16, synchron geschaltet werden, so daß ein Kondensator 2 in jedem Zeitpunkt immer höchstens nur zu einem Akkumulator 1 parallelgeschaltet ist.

Durch die Parallelschaltung von jeweils einem Kondensator 2 zu einem der ihm zugeordneten Akkumulatoren 1 übernimmt dieser Ladung bzw. gibt diese ab, bis der Kondensator 2 die gleiche Spannung wie der Akkumulator 1 trägt. Weist nun ein Akkumulator 1 durch Alterung oder sonstige Einflüsse eine niedrigere Spannung auf, so fließt direkt ein entsprechender Strom in diese Zelle.

Beim Umschalten der Schalter 5 und 6 bzw. 15 und 16 wird der Kondensator 2 von dem bisher angeschalteten Akkumulator 1 getrennt und zu dem zweiten ihm zugeordneten Akkumulator 1 parallelgeschaltet. Hier fließt dann wieder ein Ausgleichsstrom je nach Ladungszustand von Kondensator 2 und Akkumulator 1.

Das Schaltungsprinzip der Fig. 1 erfordert für N Akkumulatoren 1 N-1 Kondensatoren 2 und 4·(N-1) Schalter 5, 6, 15 und 16. Bei dem dargestellten Ausführungsbeispiel werden jeweils zwei benachbarte Akkumulatoren 1 einem Kondensator 2 zugeordnet. Dies ist keine Notwendigkeit; es reicht aus, wenn jeweils einem Kondensator 2 zwei Akkumulatoren 1 zugeordnet sind, sofern nur jedem Akkumulator 1, bis auf wenige an den Enden der Schaltung gelegene Akkumulatoren 1, jeweils in verschiedenen Takten zwei verschiedene Kondensatoren 2 parallelgeschaltet werden.

Bei einem einfachen Zusammenschluß von mehreren Batteriebänken gemäß Fig. 1 gleichen dann jeweils nur die Akkumulatoren 1 jeder Bank ihre Spannung untereinander aus. Zum Ausgleich der einzelnen Akkumulatorspannungen aller Akkumulatoren 1 der gesamten zusammengeschalteten Batteriebank ist es dann notwendig, einen, vorzugsweise den ersten bzw. letzten und nur mit einem Kondensator 2 verschalteten Akkumulator 1 über einen zusätzlichen Kondensator 2 und weitere Schalterpaare 5 und 6 mit dem letzten bzw. ersten Akkumulator 1 der weiteren Batteriebank zu verbinden.

Insgesamt ist bei einer Vorrichtung nach Fig. 1 von Vorteil, daß keine Selektionslogik erforderlich ist, daß alle Akkumulatoren 1 oder Brennstoffzellen bis auf die beiden äußeren jeder Batteriebank im Mittel fast 100 Prozent der Zeit mit einem Kondensator verbunden sind und daß selbst die Endzellen noch zu 50 Prozent der Betriebszeit mit einem Kondensator verbunden sind. An jedem Schalter liegt maximal die Spannung eines Akkumulators an, die gegenüber der Gesamtspannung einer Batteriebank erheblich kleiner ist, so daß kostengünstigere Transistorschaltungen verwendet werden können.

Da fast alle Akkumulatoren 1 die gesamte Betriebszeit der Vorrichtung zum Ladungsausgleich herangezogen werden und weniger im Leistungskreis eingesetzte Transistoren verwendet werden, steigt die Effektivität der Vorrichtung gegenüber dem Stand der Technik an.

Die Vorrichtung nach Fig. 1 gestattet eine asynchrone Anschaltung der Kondensatoren, was eine einfachere Kaskadierung der Schaltung ermöglicht.

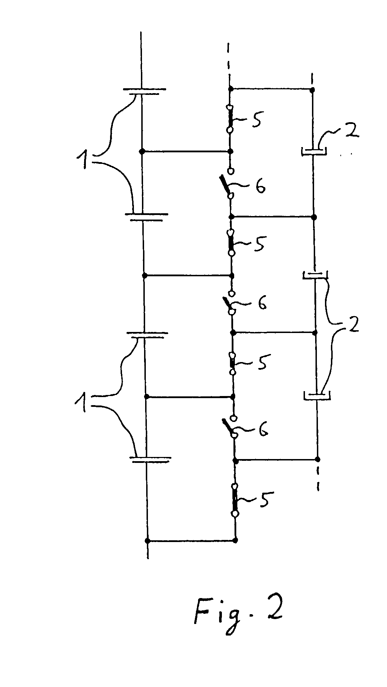

Die Fig. 2 zeigt einen Ausschnitt eines Schaltbildes einer weiteren Vorrichtung zum Ladungsausgleich für die in diesem Ausschnitt dargestellten vier Akkumulatoren 1 gemäß einem zweiten Ausführungsbeispiel. Gleiche Merkmale sind in allen Fig. mit gleichen Bezugszeichen versehen. Bei der Schaltung nach Fig. 2 handelt es sich um ein Ausführungsbeispiel mit einem gegenüber der Fig. 1 geringeren Schaltungsaufwand. Wie leicht zu erkennen ist, erfordert diese Schaltung für N Akkumulatoren 1 N-1 Kondensatoren 2 aber nur noch 2·N Schalter 5 und 6.

Bei dieser Schaltung werden in den zwei Taktschritten die Kondensatoren 2 im Gleichtakt jeweils an einen Akkumulator 1 geschaltet. Da aber die Schalter 5 und 6 jeweils für die Parallelschaltung von zwei Kondensatoren 2 vorgesehen sind, ist bei diesem Ausführungsbeispiel eine synchrone Ansteuerung aller Schalter 5 und 6 notwendig.

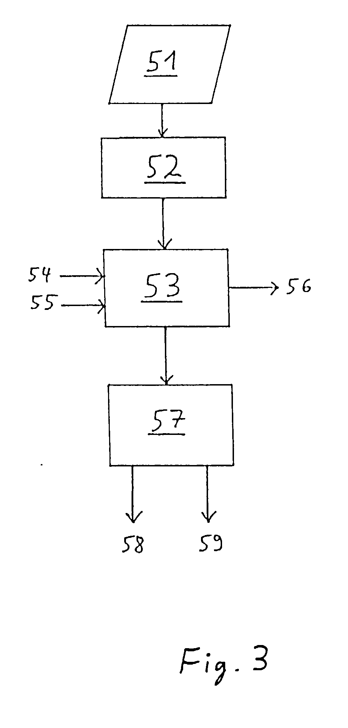

Die Fig. 3 zeigt ein Blockschaltbild für eine Ablaufsteuerung für eine Vorrichtung zum Ladungsausgleich gemäß einem der Ausführungsbeispiele. Dabei ist eine Aktivierschaltung 51 vorgesehen, die durch eine Vielzahl von Ereignissen je nach Einsatzzweck ausgelöst werden kann. Dabei kann es sich um einen einfachen manuellen Ein-/Aus-Schalter handeln, der z.B. durch das Äquivalent eines Zündschlosses bei einem akkumulatorgetriebenen Fahrzeug gebildet sein kann.

Die Schaltung kann auch einen Spannungskomparator aufweisen, der einen Schaltimpuls an den Ausgang der Schaltung weitergibt, wenn der Absolutwert der Batteriespannung innerhalb oder besser außerhalb vorbestimmter Werte liegt Diese könnten z.B. bei einem Blei-Akkumulator 1 bei einer Spannung von größer als 2,2 Volt oder kleiner als 1,95 Volt liegen. Eine Spannung eines Akkumulators 1 außerhalb dieser Werte läßt auf einen Ladungs- oder Entladungsvorgang schließen, bei dem der Ladungsausgleich aktiviert wird.

Es könnte auch ein Detektor vorgesehen sein, mit dem eine Dynamik der Batteriespannung nachweisbar ist, die auf schnelle Lastwechsel hindeutet, wie diese beim Betrieb eines Elektrofahrzeugs auftreten. Weiterhin könnte auch das Abweichen der Spannung einzelner Akkumulatoren 1 von einem momentanen Mittelwert des Gesamtsystems als Auslöser für die Aktivierschaltung 51 vorgesehen sein. Schließlich kann die Schaltung zum Ladungsausgleich z.B. auch periodisch, z.B. alle 3 Stunden, anlaufen.

Wenn die Aktivierschaltung 51 einen Startimpuls nach einer der vorgenannten Bedingungen erzeugt, die einzeln aber auch zu mehreren geprüft werden können, steuert dieser beispielsweise einen Monoflop 52 an, der für eine vorbestimmte Zeitdauer, z.B. eine halbe Stunde, die Vorrichtung zum Ladungsaustausch anstellt, oder diese Zeitdauer wird durch ein Merkmal der angeschalteten Last festgelegt. Die Vorrichtung wird durch eine Logikeinheit 53 überwacht, der weitere Signale 54 und 55 zur Detektion eines Überstromes in oder einer Übertemperatur von Bauteilen, wie Transistoren, zugeführt werden. Diese Schaltung 53 kann auch einen Ausgang 56 für eine Anzeige für Status- oder Steuersignale aufweisen, z.B. für einen Lastabwurf. Diese Logikeinheit 53 steuert den Taktgenerator 57 an, an dessen Ausgängen 58 und 59 die Steuereingänge der Schalter 5 und 6 bzw. 15 und 16 angeschlossen werden.

## Patentansprüche

1. Vorrichtung zum Ladungsaustausch zwischen zwei gleichartigen Energiespeichern oder Energiewandlern (1) einer Vielzahl von in Reihe geschalteten und einen Gesamtenergiespeicher oder Gesamtenergiewandler bildenden Energiespeichern beziehungsweise Energiewandlern (1), bei der elektrische Speicher (2), die jeweils aus einem von Energiespeichern beziehungsweise Energiewandlern (1) geladenen kapazitiven Element bestehen, mittels über einen Taktgeber (57) ansteuerbarer Schalter (5, 6; 15, 16) jeweils einem der gleichartigen Energiespeicher beziehungsweise Energiewandler (1) in mindestens einem Taktschritt parallelgeschaltet sind, **dadurch gekennzeichnet**, daß parallel zu jedem Energiespeicher beziehungsweise Energiewandler (1) zwei Serienschaltungen von jeweils zwei in Reihe geschalteten Schaltern (5, 6; 15, 16) vorgesehen sind, daß an den Verbindungspunkt der zwei Schalter (5, 6; 15, 16), deren Serienschaltung parallel zu dem einen Energiespeicher beziehungsweise Energiewandler (1) liegt, und an den entsprechenden Verbindungspunkt der zwei Schalter (5, 6; 15, 16), deren Serienschaltung parallel zu dem anderen, benachbarten Energiespeicher beziehungsweise Energiewandler (1) liegt, jeweils ein Polabgriff eines kapazitiven Elementes (2) geschaltet ist und daß die zwei Schalter (5, 6; 15, 16) der jeweils zu einem Energiespeicher beziehungsweise Energiewandler (1) parallelen Serienschaltung von dem Taktgeber (57) wechselseitig geöffnet und geschlossen werden, so daß jedes kapazitive Element (2) wechselweise einem von den zwei zugeordneten, unmittelbar benachbarten Energiespeichern beziehungsweise Energiewandlern (1) parallelgeschaltet ist.

2. Vorrichtung zum Ladungsaustausch zwischen zwei gleichartigen Energiespeichern oder Energiewandlern (1) einer Vielzahl von in Reihe geschalteten und einen Gesamtenergiespeicher oder Gesamtenergiewandler bildenden Energiespeichern beziehungsweise Energiewandlern (1), bei der elektrische Speicher (2), die jeweils aus einem von Energiespeichern beziehungsweise Energiewandlern (1) geladenen kapazitiven Element bestehen, mittels über einen Taktgeber (57) ansteuerbarer Schalter (5, 6) jeweils einem der gleichartigen Energiespeicher beziehungsweise Energiewandler (1) in mindestens einem Taktschritt parallelgeschaltet sind, **dadurch gekennzeichnet**, daß parallel zu jedem Energiespeicher beziehungsweise Energiewandler (1) eine einzige Serienschaltung aus zwei Schaltern (5, 6) vorgesehen ist, daß alle kapazitiven Elemente (2) in Reihe geschaltet sind, wobei ein Polabgriff des jeweiligen kapazitiven Elementes (2) mit dem Verbindungspunkt der zwei Schalter (5, 6), deren Serienschaltung einem Energiespeicher beziehungsweise Energiewandler (1) parallelgeschaltet ist, verbunden ist, und der andere Polabgriff mit dem entsprechenden Verbindungspunkt der zwei Schalter (5, 6), deren Serienschaltung parallel zu dem unmittelbar benachbarten Energiespeicher beziehungsweise Energiewandler (1) liegt, verbunden ist, und daß alle Schalter (5, 6) synchron angesteuert sind.

3. Vorrichtung nach Anspruch 1 oder Anspruch 2, dadurch gekennzeichnet, daß der Taktgeber (57) von einer Ablaufsteuerschaltung (51, 52, 53) ansteuerbar ist, die über eine Aktivierungsschaltung (51) verfügt, mit der der Taktgeber (57) für einen vorbestimmbaren oder von einer angeschalteten Last bestimmten Zeitraum einschaltbar ist.

## Claims

1. Device for charge exchange between two similar energy accumulators or energy converters (1) of a plurality of series-connected energy accumulators or energy converters (1), respectively, which form an aggregate energy accumulator or an aggregate energy converter, wherein electrical accumulators (2), which consist each of a capacitive element charged by one of said energy accumulators or energy converters (1), respectively, are connected, by means of a switch (5, 6; 15, 16) controllable via a clock generator (57), in parallel with a respective one of said similar energy accumulators or energy converters (1), respectively, in at least one clock period, **characterized in** that two series circuits of respectively two series-connected switches (5, 6; 15, 16) are provided in parallel with each energy accumulator or energy converter,(1) respectively, that one respective terminal tap of a capacitive element (2) is connected to the junction point of said two switches (5, 6; 15, 16) whose series circuit is parallel with said one energy accumulator or energy converter (1), respectively, and to the corresponding junction point of said two switches (5, 6; 15, 16) whose series circuit is parallel to the other adjacent energy accumulator or energy converter (1), respectively, and that said two switches (5, 6; 15, 16) of said series circuit connected in parallel with an energy accumulator or energy converter (1), respectively, are opened and closed in alternation by said clock generator (57) in such a way that each capacitive element (2) will be connected in alternation in parallel with one of said two associated and immediately adjacent energy accumulators or energy converters (1), respectively.

2. Device for charge exchange between two similar energy accumulators or energy converters (1) of a plurality of series-connected energy accumulators or energy converters, respectively, which form an aggregate energy accumulator or an aggregate energy converter (1), wherein electrical accumulators (1), which consist each of a capacitive element (2) charged by one of said energy accumulators or energy converters (1), respectively, are connected, by means of a switch (5, 6) controllable via a clock generator (57), in parallel with a respective one of said similar energy accumulators or energy converters (1), respectively, in at least one clock period, **characterized in** that a single series circuit consisting of two switches (5, 6) is provided in parallel with each energy accumulator or energy converter (1), respectively, that all capacitive elements (2) are connected in series, with one terminal tap of the respective capacitive element (2) being connected to the junction point of said two switches (5, 6) whose series circuit is connected in parallel with an energy accumulator or energy converter (1), respectively, and that the other terminal tap is connected to the corresponding junction point of said two switches (5, 6) whose series circuit is connected in parallel with the immediately adjacent energy accumulator or energy converter (1), respectively, and that all switches (5, 6) are controlled in a synchronised manner.

3. Device according to Claim 1 or Claim 2, **characterized** in that said clock generator (57) is controllable by a sequence controller circuit (51, 52, 53) which is provided with an activating circuit (51) which serves to turn on said clock generator (57) for a predeterminable period of time or for a period of time predetermined by a connected load.

## Revendications

1. Dispositif à échanger des charges entre deux accumulateurs d'énergie ou respectivement convertisseurs d'énergie similaires (1) parmi une pluralité des accumulateurs d'énergie ou respectivement convertisseurs d'énergie (1) en série, qui constitue un ensemble d'accumulateurs d'énergie ou convertisseurs d'énergie, dans lesquels des accumulateurs électriques (2), dont chacun consiste d'un élément capacitif chargé par un desdits accumulateurs d'énergie ou respectivement convertisseurs d'énergie, sont reliés, moyennant un commutateur (5, 6; 15, 16) qui est commandable par un rythmeur (57), en parallèle à un desdits accumulateurs d'énergie ou respectivement convertisseurs d'énergie similaires (1) respectif au cours d'au moins une période de rythme, **caractérisé en** ce que deux circuits en série de deux commutateurs respectifs en série (5, 6,; 15, 16) sont mis en parallèle à chaque accumulateur d'énergie ou respectivement convertisseur d'énergie (1), en ce qu'une prise polaire respective d'un élément capacitif (2) est reliée au point de jonction des commutateurs (5, 6; 15, 16) dont le circuit en série est mis en parallèle audit autre accumulateur d'énergie ou respectivement convertisseur d'énergie (1), et au point de jonction correspondant desdits deux commutateurs (5, 6; 15, 16) dont le circuit en série est mis en parallèle à l'autre accumulateur voisin ou respectivement convertisseur d'énergie voisin (1), et en ce que lesdits deux commutateurs (5, 6; 15, 16) dudit circuit en série mis en parallèle à un accumulateur d'énergie ou respectivement convertisseur d'énergie, sont ouverts ou fermé à tour de rôle par ledit rythmeur (57) de façon que chaque élément capacitif (2) soit relié, à tour de rôle, en parallèle à un desdits deux accumulateurs d'énergie or respectivement convertisseurs d'énergie (1) affectés et directement voisins.

2. Dispositif à échanger des charges entre deux accumulateurs d'énergie ou respectivement convertisseurs d'énergie similaires (1) parmi une pluralité des accumulateurs d'énergie ou respectivement convertisseurs d'énergie (1) en série, qui constitue un ensemble d'accumulateurs d'énergie ou convertisseurs d'énergie, dans lesquels des accumulateurs électriques (2), dont chacun consiste d'un élément capacitif chargé par un desdits accumulateurs d'énergie ou respectivement convertisseurs d'énergie, sont reliés, moyennant un commutateur (5, 6; 15, 16) qui est commandable par un rythmeur (57), en parallèle à un desdits accumulateurs d'énergie ou respectivement convertisseurs d'énergie similaires (1) respectif au cours d'au moins une période de rythme, **caractérisé en** ce qu'un seul circuit en série, qui est constitué par deux commutateurs (5, 6), est disposé en parallèle å chaque accumulateur d'énergie ou respectivement convertisseur d'énergie (1), en ce que tous les éléments capacitifs (2) sont mis en série, à une prise polaire de l'élément capacitif respectif (2) étant reliée au point de jonction desdits deux commutateurs (5, 6) dont le circuit en série est mis en parallèle à un accumulateur d'énergie ou respectivement convertisseur d'énergie (1), et en ce que l'autre prise polaire est reliée au point de jonction correspondant desdits deux commutateurs (5, 6) dont le circuit en série est mis en parallèle à l'accumulateur d'énergie ou respectivement convertisseur d'énergie (1) directement voisin, et en ce que tous les commutateurs (5, 6) sont commandés de façon synchronisée.,

3. Dispositif selon la revendication 1 ou la revendication 2, **caractérisé en** ce que ledit rythmeur (57) est commandable par un circuit de commande séquentielle (51, 52, 53) qui est équipé d'un circuit activateur (51) qui sert à mettre en circuit ledit rythmeur (57) pour une période prédéterminable ou pour une période prédéterminée par une charge reliée.
